# EUROPEAN PATENT SPECIFICATION

(11) **EP 3 662 180 B1**
(45) Date of publication and mention of the grant of the patent: **11.05.2022**
(21) Application number: 18746184.3
(22) Date of filing: 26.07.2018
(51) Int. Cl.: F16H 21/36, F16H 21/44, F16H 57/04, F16K 31/528, F16K 31/12, F15B 15/06, F16K 31/143

(54) **LEVER MECHANISM FOR CONVERTING A MOTION FROM LINEAR TO ROTARY**
HEBELMECHANISMUS ZUR UMWANDLUNG EINER BEWEGUNG VON LINEAR ZU ROTATION
MÉCANISME DE LEVIER PERMETTANT DE CONVERTIR UN MOUVEMENT LINÉAIRE EN UN MOUVEMENT ROTATIF

(30) Priority: 03.08.2017 IT 201700089308
(43) Date of publication of application: 10.06.2020
(73) Proprietor: Air Torque S.p.A., 24060 Costa di Mezzate (Bergamo) (IT)
(72) Inventor: MARINONI, Antonio, 24064 GRUMELLO DEL MONTE (IT); PARIS, Ignazio, 24064 GRUMELLO DEL MONTE (IT)
(74) Representative: Modiano, Micaela Nadia
(86) International application number: PCT/EP2018/070312
(87) International publication number: WO 2019/025285

(56) References cited:
- EP-B1- 3 146 221
- EP-B1- 3 149 374
- WO-A1-2009/095800
- WO-A1-2015/177752
- WO-A1-2015/181794
- GB-A- 2 103 286

## Description

The present invention relates to a lever mechanism for converting a motion from linear to rotary. The lever mechanism described herein is particularly but not exclusively useful and practical for converting a motion of a linear and reciprocating type, for example generated by a pneumatic cylinder-piston assembly, into a motion of the rotary and reciprocating type.

Various types of mechanisms in general and of lever mechanisms in particular, i.e., various types of mechanisms constituted by a set of mechanical elements adapted to transmit motion in a complex machine, in which certain elements trace particular curves and which can convert a motion of one type into a motion of a different type, are currently known.

These mechanisms are currently used in countless machines and mechanical devices: a typical example of a mechanism is the rod-and-crank mechanism, which can convert reciprocating linear motion into circular motion.

An example of a lever mechanism for converting a motion from linear to rotary currently in use is provided by European patent application EP3149374 in the name of this same Applicant, shown schematically in Figure 1. WO 2009/095800 A1 relates to a valve actuator comprising a slider adapted to slide along slides along multiple linear guides, and multiple forks integrated with the sleeve hold an element extending from the slider in a gap between prongs to generate a translational motion upon rotation of the sleeve. WO 2015/181794 A1 relates to a lever mechanism for converting a motion from linear to rotary that facilitates the substitution or topping-up of the lubricant.

The above patent application, in a manner similar to other lever mechanisms of the known type, provides for a lever L which is formed by a cylindrical element C and by a pair of slot links G1, G2 which are fixed frontally on said cylindrical element C. The lever L is turned by a slider A which slides along a guiding bar B, acting on said lever L by means of a pivot P. The pivot P is coupled to the slider A, having a longitudinal axis which is perpendicular to the sliding direction of the slider A and being able to slide within two guiding slots E provided on the two slot links G1, G2.

In practice, the slider A, by moving along the guiding bar B, entrains with it the pivot P, which acts by rolling on the internal surface S of the guiding slots, causing the rotation of the slot links G1, G2 along an arc and the consequent rotation of the cylindrical element C about its own axis.

Lever mechanisms of the known type, such as for example the one that has just been described, are not free from drawbacks, which include the fact that the contact surface between the pivot and the slots is very limited and consequently a high concentration of the load is created, with a consequent high sliding wear, produced by the frictions that occur between the surfaces of said mechanical elements during operation.

Furthermore, normally in lever mechanisms of the known type the pivot acts directly on the internal surface of the guiding slots and therefore there is a metal-on-metal rubbing which causes considerable friction and a rapid wear of the components.

Another drawback of lever mechanisms of the known type resides in that since the pivot has a circular cross-section, the contact section between the pivot and the internal surface of the guiding slots is very small and contact tension is therefore very high, with negative consequences on the fluidity of the movement.

Furthermore, the small contact surface between the pivot and the internal surface of the guiding slots can lead, in lever mechanisms of the known type, to jamming and failure, thus making it necessary to perform frequent maintenance interventions.

A further drawback of lever mechanisms of the known type resides in that resistance to motion, produced by the frictions between the surfaces of the mechanical elements that constitute them, requires greater force in order to perform this movement.

The aim of the present invention is to overcome the limitations of background art described above, by providing a lever mechanism for converting a motion from linear to rotary which allows to obtain effects which are similar or better than those obtainable with known lever mechanisms, reducing the friction between the surfaces and the sliding wear that normally affect the mechanical elements of lever mechanism and consequently extending the useful life of the lever mechanism.

Within this aim, an object of the present invention is to provide a lever mechanism that allows a more fluid movement than the background art.

Another object of the present invention is to provide a lever mechanism that prevents failures and jammings caused by friction between the pivot and the internal surface of the guiding slots.

Another object of the present invention is to conceive a lever mechanism that allows to store and retain inside it a reserve of lubricant that is sufficient to ensure adequate and durable lubrication of the mechanical elements, consequently reducing the frequency of maintenance interventions.

A further object of the present invention is to conceive a lever mechanism that opposes less resistance to movement and therefore can be actuated even by applying less force, thus allowing to use optionally motor means that are less powerful and use less energy.

Another object of the present invention is to provide a lever mechanism that is highly reliable, relatively simple to provide and at low costs.

This aim, as well as these and other objects which will become better apparent hereinafter, are achieved by a lever mechanism according to claims 1 or 11.

Further characteristics and advantages of the invention will become better apparent from the description of a preferred but not exclusive embodiment of the lever mechanism according to the invention, illustrated by way of nonlimiting example in the accompanying drawings, wherein:

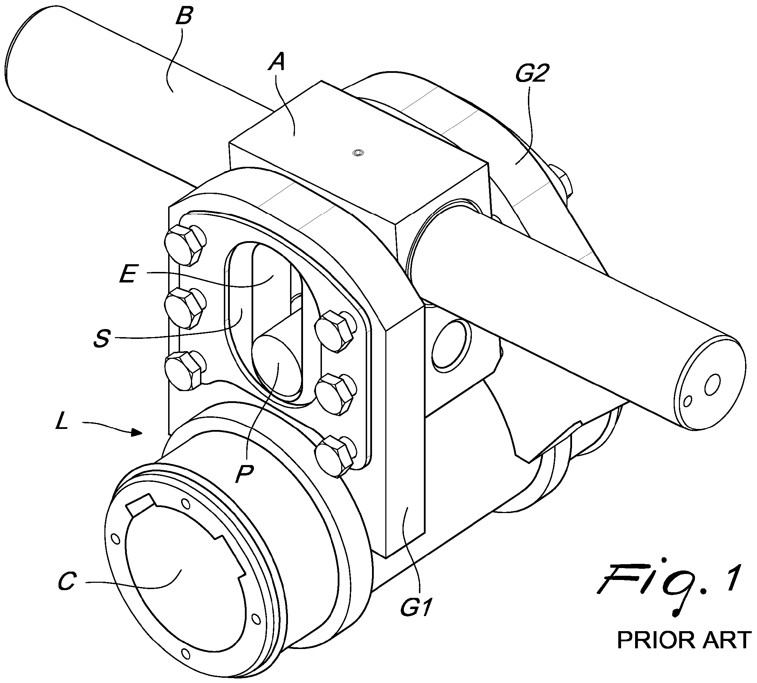

Figure 1 is a view of a mechanism of the background art;
Figure 2 is an exploded view of an embodiment of the lever mechanism according to the present invention;
Figures 3 and 4 are perspective views of an embodiment of the lever mechanism according to the present invention, respectively in the presence and in the absence of the cover of a slot link;

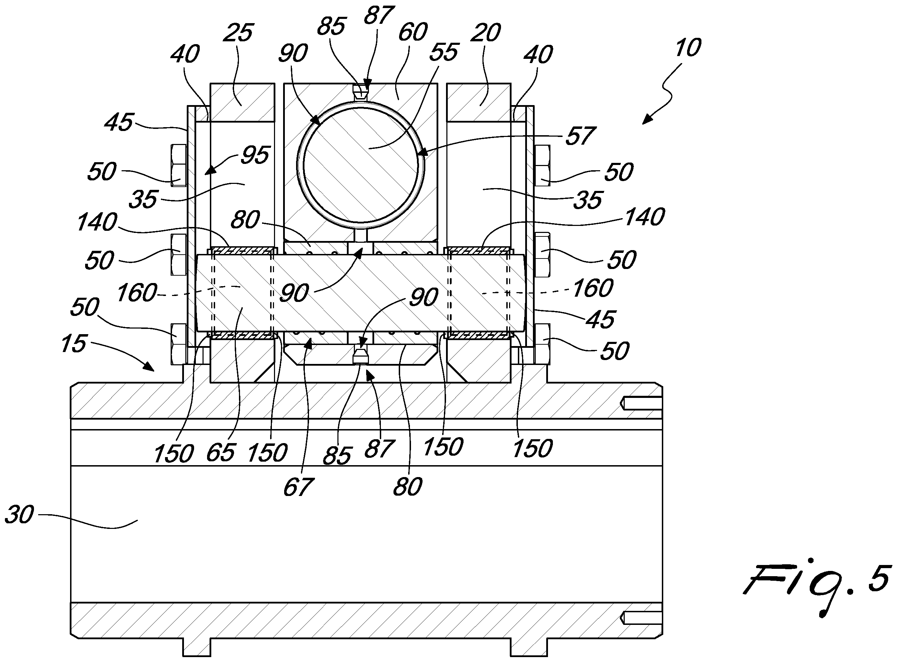

Figure 5 is a front sectional view of an embodiment of the lever mechanism according to the present invention;

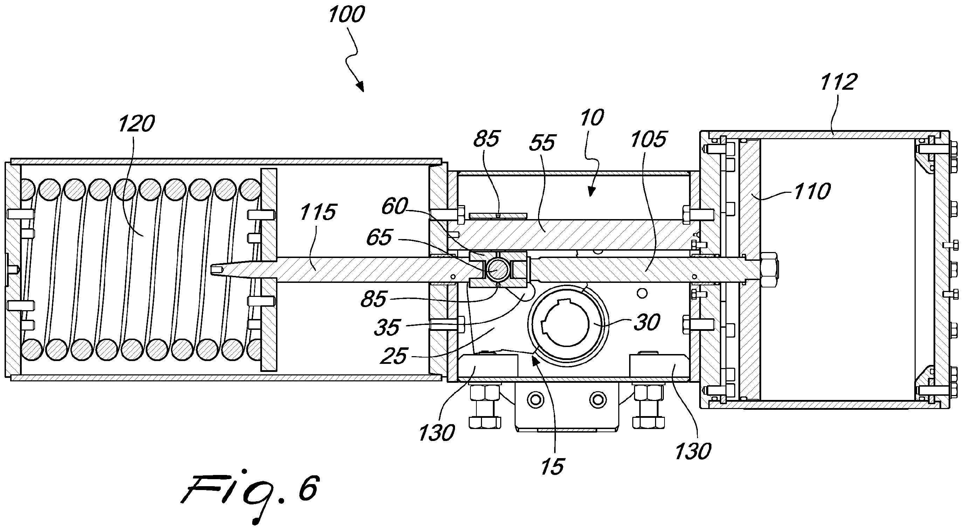

Figure 6 is a sectional side view of a single-action pneumatic actuator provided with a return spring for the automatic return of the piston, in which an embodiment of the lever mechanism according to the present invention is used;
Figure 7 is a perspective view of a sliding block and of the pads that are present in a possible second embodiment of the lever mechanism according to the present invention;
Figure 8 is a perspective view of a possible embodiment of a plate according to the present invention.

With reference to the figures, the lever mechanism for converting motion from linear to rotary according to the invention, designated generally by the reference numeral 10, comprises a guiding bar 55, a slider 60, which slides along said guiding bar 55 and acts on a lever 15 by means of a pivot 65. The lever 15 is constituted substantially by a cylindrical element 30, such as for example a tube, and by a pair of slot links 20 and 25 which are arranged frontally with respect to each other, both being fixed integrally on said cylindrical element 30 and between which the guiding bar 55 and the slider 60 are arranged.

The slider 60 in practice is a body which preferably has substantially the shape of a parallelepiped, preferably provided by using a metallic material such as for example steel.

In the upper part of the slider 60 there is a first hole 57 which passes through it longitudinally from one side to the other and the guiding bar 55 is arranged in said hole 57; said bar is fixed and said slider 60 slides along it.

A second hole 67 is provided in the lower part of the slider 60 and crosses it transversely from one side to the other; the pivot 65 is arranged in said hole 67. Advantageously, the pivot 65 is free to rotate within the hole 67, remaining in any case locked laterally by virtue of an adapted containment system, which will be described hereinafter.

In other words, the cylindrical element 30 and the pivot 65 are arranged, so as to be mutually spaced, so that their longitudinal axes are parallel, and are connected by means of the slot links 20, 25, while the guiding bar 55 is arranged with the longitudinal axis oriented at right angles to both the cylindrical element 30 and the pivot 65 and is connected to the pivot 65 by means of the slider 60.

The guiding bar 55, also preferably provided by using a metallic material, such as for example steel, is in practice a rectilinear cylindrical element which has a smooth surface and has the task of constraining the movement of the slider 60, forcing it to follow the direction defined by the axis of said guiding bar 55, allowing the slider 60 exclusively a reciprocating linear motion, i.e., toward one or the other of the ends of the guiding bar 55.

Both the slot links 20, 25 and the cylindrical element 30 are preferably provided by using a metallic material, such as for example steel.

Each one of the slot links 20 and 25 is in practice a rectilinear or curvilinear bar, which is provided internally with a guiding slot 35 engaged by an end of the pivot 65 which slides within said guiding slot 35, moving with a reciprocating motion.

The pivot 65, also preferably provided by using a metallic material, has a length that is longitudinally longer than the width of the slider 60 in which it is accommodated and in practice has two ends that protrude from both sides of said slider 60 and engage the guiding slots 35.

The lever mechanism 10 according to the invention furthermore comprises at least one sliding block 140, which is coaxial and coupled to the pivot 65, interposed between the pivot 65 and the internal surface 350 of at least one of the guiding slots 35, inside which said sliding block 140 can slide.

In the preferred and illustrated embodiment, the sliding blocks 140 are two, are substantially shaped like a parallelepiped, with advantageously rounded edges, and each comprises an axial hole 151 which is engaged at least by a portion of the pivot 65, the pivot 65 being free to rotate within said axial holes 151.

The two sliding blocks 140 are each arranged at one of the two ends of the pivot 65, between the pivot 65 and the internal surface 350 of the guiding slot 35 which is engaged by said end of the pivot 65.

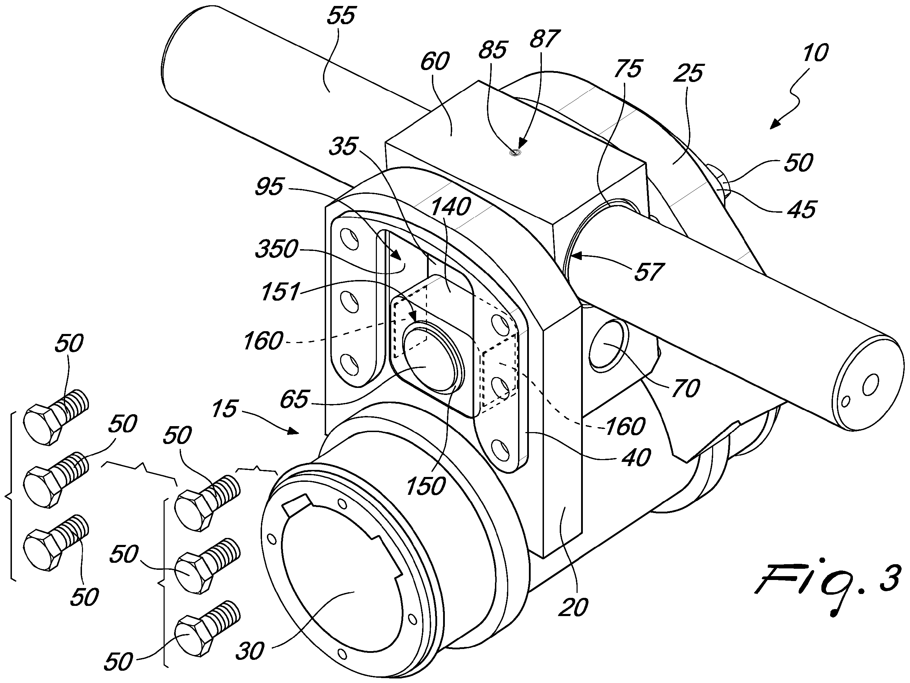

As shown in Figure 3, the guiding slots 35 conveniently have a substantially rectangular shape with rounded edges, so as to be at least partly complementary to the sliding blocks 140.

Advantageously, the sliding blocks 140 have a length, in the direction of the longitudinal axis of the pivot 65, that is at least equal to the thickness of the slot link 20, 25 inside which they are arranged.

Optionally, the lever mechanism 10 according to the invention also comprises fixing rings 150 which are arranged on the pivot 65, at the two sides of each sliding block 140, with the purpose of keeping the sliding blocks 140 in position.

The lever mechanism 10 according to the invention also comprises at least two, or at least two for each sliding block 140, friction elements 160, 161 which are arranged between each sliding block 140 and the internal surface 350 of the guiding slot 35 inside which said sliding block 140 can slide.

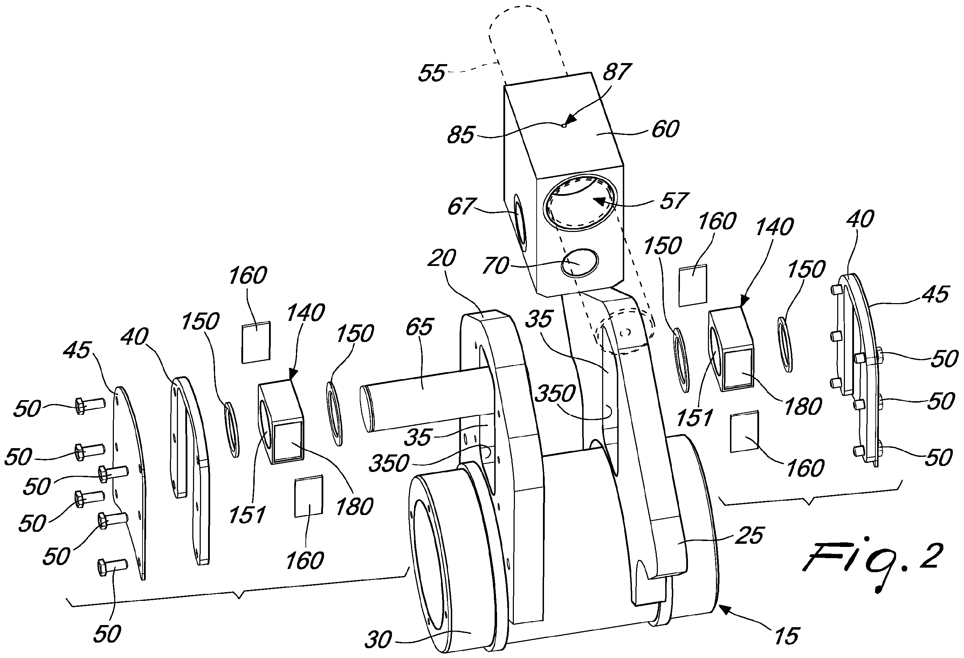

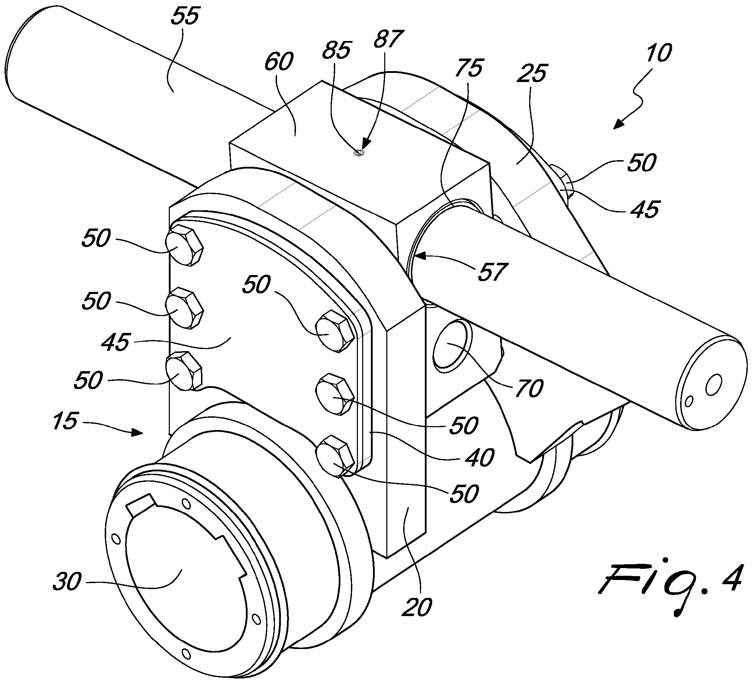

In a first preferred embodiment shown in Figures 2, 3 and 4, said friction elements are constituted by at least two plates 160. The term plate 160 designates an element that is constituted by a single part, which has at least two flat and parallel faces and has a dimension (thickness) that is significantly smaller than the other two dimensions (length and width).

In greater detail, in the preferred embodiment, each sliding block 140 is provided with two mutually parallel rectangular faces, which are adjacent to the internal surface 350 of the respective guiding slot 35, on each of which a plate 160 is fixed which has substantially the same shape as the face on which it is fixed.

Advantageously, a rectangular receptacle 180 adapted to accommodate said plates 160 is provided on each one of the rectangular faces on which said plates 160 are fixed.

In this manner, the plates 160 are interposed between each sliding block 140 and the internal surface 350 of the guiding slot 35, being fixed at one end to the sliding block 140 and being in contact, at the other end, with the internal surface 350 of the guiding slot 35.

In practice, when the pivot 65 slides within the guiding slot 35, friction occurs between the internal surface 350 of the guiding slot 35 and the plate 160, which rests with the entire rectangular surface on the internal surface 350.

It should be noted that in this manner, in the lever mechanism 10 according to the invention, the contact surfaces by means of which the pivot 65 and each one of the slot links 20, 25 interact, are much larger than in the prior art, according to which the pivot rests directly on the internal surface of the guiding slots 35.

Furthermore, still according to the invention, interaction and friction occur between two flat and parallel surfaces and not between a flat surface and a curved one. These characteristics produce advantageous effects in terms of friction and contact tension and allow greater fluidity of motion.

Advantageously, the plates 160 are made of thermoplastic material, thus reducing friction and avoiding metal-on-metal friction which causes wear and failures of metallic elements. Furthermore, the plates 160 thus provided are low in cost, easy to provide and easily replaceable.

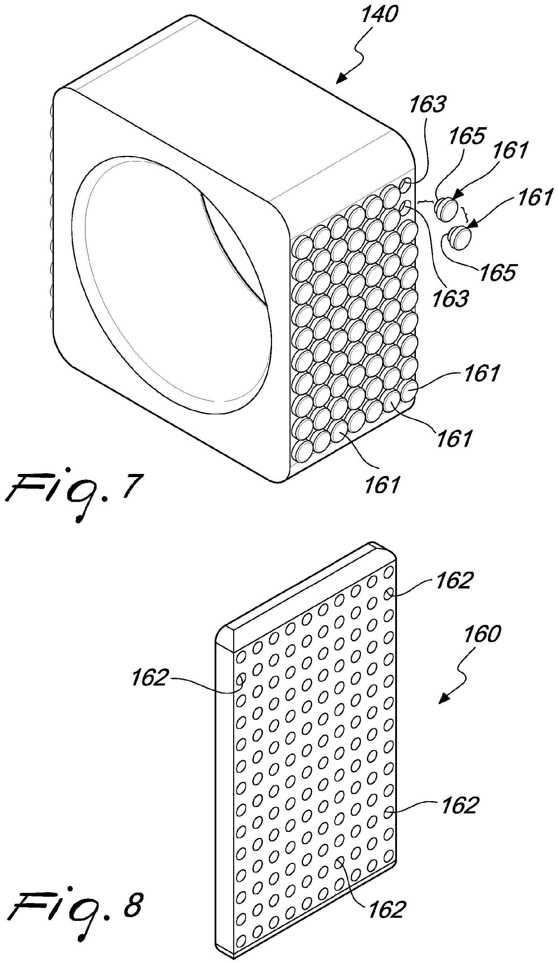

According to the invention shown in Figure 8, on each plate 160, and more precisely on the face of the plate 160 that is arranged in contact with the internal surface 350 of the guiding slot 35, there are cavities 162 adapted to retain the lubricant that is normally distributed on the surfaces subjected to friction.

In the example shown in Figure 8, the cavities 162 are arranged so as to be equidistant from each other and have a substantially hemispherical shape; in any case, different shapes and distributions of the cavities 162 are possible.

In a second possible embodiment, shown in Figure 7, the friction elements 160, 161 are constituted by a plurality of pads 161 which are fixed to the faces of the sliding block 140 that are adjacent to the internal surface 350 of the guiding slot 35. These pads 161, according to the invention, are therefore arranged between each sliding block 140 and the internal surface 350 of the guiding slot 35 inside which said sliding block 140 can slide.

In greater detail, in this second possible embodiment, each sliding block 140 is provided with two mutually parallel rectangular faces, which are adjacent to the internal surface 350 of the respective guiding slot 35, on each of which multiple pads 161 are fixed which are distributed substantially along the entire surface of the face on which they are fixed.

Preferably, the pads 161, which are present in this second possible embodiment, have a substantially cylindrical and/or parallelepipedal shape, having at least one flat face which makes contact with the internal surface 350 of the guiding slot 35, and have a size that is significantly smaller than the size of the face to which they are fixed.

In practice, the pads 161 are interposed between each sliding block 140 and the internal surface 350 of the guiding slot 35, being fixed to the sliding block 140 at one end and being in contact, at the other end, with the internal surface 350 of the guiding slot 35. In this manner, when the pivot 65 slides within the guiding slot 35, friction occurs between the internal surface 350 of the guiding slot 35 and the pads 161, which rest with their flat face on the internal surface 350 of the guiding slot 35.

Preferably, the pads 161 are fixed, like plugs, inside holes 163 which are conveniently provided on the face of the sliding block 140. For this purpose, the pads 161 can have a protrusion 165 adapted to be accommodate According to the invention gaps are formed between the pads 161 that act as a lubricant reserve, retaining the lubricant that is normally distributed on the surfaces subjected to friction.

Advantageously, the pads 161 can be made of thermoplastic material.

Although not shown, an embodiment of the lever mechanism according to the invention is also possible in which the friction elements comprise both plates 160 and pads 161. In this case, therefore, on the sliding blocks 140 there are both one or more plates 160, which have smaller dimensions than the face of the sliding block 140, and multiple pads 161.

Going back to the preferred and illustrated embodiment, with particular reference to Figures 2, 3 and 4, at the hole 57, on the internal surface of the slider 60 which is in contact with the guiding bar 55, there are bushes 75 which support the guiding bar 55 and are preferably grooved bushes, i.e., with helical lubrication channels on the internal sliding surface.

Advantageously, in the illustrated example, in particular with reference to Figure 3, the bushes 75 arranged within the slider 60 are mutually separated by a space 90 that is assigned to accommodating a reserve of lubricant, which is useful to limit frictions and therefore reduce sliding wear between the bushes 75 and the guiding bar 55, by expanding on the surfaces affected by sliding by virtue of the movement of the lever mechanism 10, in particular by virtue of the sliding of the slider 60 on the guiding bar 55.

Also in the preferred and illustrated embodiment, at the hole 67, on the internal surface of the slider 60 that is in contact with the pivot 65, there are bushes 80 which support said pivot 65, and are preferably grooved bushes, i.e., provided with helical lubrication channels on the internal sliding surface.

Conveniently, like the bushes 75, the bushes 80 arranged inside the slider 60 also are mutually separated by the space 90 assigned to accommodating a reserve of lubricant, which is useful to limit frictions and therefore reduce sliding wear between the bushes 80 and the pivot 65, by expanding on the surfaces affected by sliding by virtue of the movement of the lever mechanism 10, in particular by virtue of the rotation of the pivot 65.

In the embodiment of the lever mechanism 10 described herein, inside the slider 60 there is therefore a single space 90 adapted to accommodate a reserve of lubricant, but this solution does not exclude, in a different embodiment of the invention, to provide inside the slider 60 more than a single space adapted to accommodate a reserve of lubricant, for example a first space dedicated to the pivot 65 between the bushes 80 and a second space dedicated to the guiding bar 55 between the bushes 75.

Conveniently, in the lower part of the slider 60 there are furthermore longitudinal seats 70, preferably a pair, which are mutually opposite and have such a depth as not to interfere with the hole 67 and with the pivot 65 and constitute the seats for the connection to the slider 60 of linear motion transmission means, such as for example stems 105 and 115 adapted to transmit to the slider 60 a linear motion generated by a pneumatic piston 110 or by a return spring 120.

In one embodiment, said seats 70 can be threaded internally, constituting the female thread for screwing, and therefore for connection to the slider 60, of the linear motion transmission means.

In another embodiment, the slider 60 of the lever mechanism 10 according to the invention can also have more than two seats 70 or even a single seat 70, which can be threaded internally or not.

Finally, the slider 60 can include holes 87, which can be closed, preferably one arranged on the upper face and one on the lower face, which provide access from the outside to the spaces 90 that are present within said slider 60 between the bushes 75 and between the bushes 80, said spaces 90 containing, as mentioned, a quantity of lubricant. Said holes 87 are therefore advantageously useful to perform replacement or replenishment of the lubricant.

The holes 87 can be controlled from the outside to open and close by virtue of screws 85, one for each one of the holes 87, said screws 85 preferably having a hexagonal head.

Advantageously, in the preferred embodiment, the first slot link 20 has a shape in which the right side and the left side are mutually parallel, while the second slot link 25 has a more unusual shape, in which the right side and the left side are inclined outward, for example with a breadth of approximately 45°. This particular shape of the second slot link 25 allows to adjust the stroke of the rotation of the lever 15, which stops when one of the inclined sides of the second slot link 25 strikes an adapted stroke limiting block 130.

In another possible embodiment, the second slot link 25 can have the two sides inclined outward with two mutually different breadths, or the slot links 20 and 25 can both have the same shape, having parallel sides or sides that are inclined outward by a certain breadth.

Advantageously, both slot links 20 and 25 have a containment system, in particular adapted to block the lateral movements of the pivot 65 of the slider 60; on both slot links 20 and 25 there are in fact two plates, i.e., a spacer 40 and a cover 45, which have mutually different shapes and functions.

The spacer 40 and the cover 45 are both arranged, in this order, on the outer face of the slot link 20 or 25, being fixed to the corresponding slot link by means of a series of screws 50.

The spacer 40 has a flat surface and is provided internally, in addition of course to the holes required for the screws 50, with a slot that has a different shape and is larger than the guiding slot 35 of the slot links 20 and 25 of the lever 15.

Once the spacer 40 has been installed, the cover 45 is arranged thereon and has, except of course for the holes required for the screws 50, a flat and continuous surface.

Due to the combination between the spacer 40 and the cover 45, in the slot of the spacer 40 of each slot link 20 or 25 a space 95 forms which is assigned to accommodating advantageously a reserve of lubricant, which is useful to limit frictions and therefore reduce sliding wear between the cover 45 and the pivot 65.

The cylindrical element 30 constitutes in practice the element of the lever mechanism 10 that is adapted to accommodate inside it, i.e., in its cavity, an element or a part of the element that will have to be actuated by means of the lever mechanism 10, coupling it to the movement of said cylindrical element 30.

The cylindrical element 30 can be a tube or another equivalent cylindrical element which is not necessarily hollow and is in any case capable of constraining to its own movement an element or part of the element that must be actuated by means of the lever mechanism 10.

The operation of the lever mechanism 10 according to the present invention, for example in the case in which it is used is in a pneumatically actuated single-action actuator 100 provided with a return spring 120 for the automatic return of the piston 110, is as follows.

In order to move the pneumatic actuator 100, a quantity of air that is sufficient to actuate, by virtue of the applied pressure, the piston 110 is introduced in the cylinder 112, a stem 105 being fixed to said piston 110. The linear motion generated by the pneumatic piston 110 is then transmitted to the slider 60 by the stem 105, the latter being connected to the slider 60, by being inserted in a seat 70 comprised therein.

By virtue of the thrust received from the stem 105, the slider 60 slides along the guiding bar 55 and entrains with it the pivot 65 and the sliding blocks 140 that are coupled thereto. The sliding blocks 140 thus each press one plate 160 against the internal wall 350 of the guiding slots 35, producing a thrust on the slot links 20, 25 which determines a rotation of the lever 15 about the longitudinal axis of the tube 30.

During the rotation of the lever 15, the pivot 65, and the sliding blocks 140 and the plates 160 with it, slides within the guiding slots 35.

The stroke of the rotation of the lever 15 stops when one of the inclines sides of the second slot link 25 strikes one of the stroke limiting blocks 130 included in the body of the pneumatic actuator 100.

As a consequence of the forward motion described above of the slider 60, furthermore, the return spring 120, to which a stem 115 is fixed which is connected to the slider 60 by being inserted in a seat 70 comprised therein, is compressed.

When one wishes to return the pneumatic actuator 100 to its initial state, or inactive state, and start the return motion of the slider 60, the air previously introduced in the cylinder 112 is released and the return spring 120 can return to its own natural shape. The linear motion generated by the return spring 120 is thus transmitted to the slider 60 by the stem 115.

Due to the thrust received from the stem 115, the slider 60 slides along the guiding bar 55 in the opposite direction with respect to the forward motion direction and entrains with it the pivot 65 and the sliding blocks 140 that are coupled thereto. The sliding blocks 140 thus each press a plate 160 against the internal wall 350 of the guiding slots 35, producing a thrust on the slot links 20, 25 which determines a rotation of the lever 15 in the opposite direction with respect to the direction of the preceding rotation.

In summary, the reciprocating linear motion in the two directions generated by the pneumatic piston 110 or by the return spring 120 is transmitted by the stems 105 and 115 to the slider 60, which slides along the guiding bar 55 and entrains with it the pivot 65, which by acting by means of the sliding blocks 140 and the plates 160 on the guiding slots 35 of the slot links 20 and 25 of the lever 15 causes a rotation of lever 15 about the axis of the cylindrical element 30.

It should be noted that the operation of the lever mechanism 10 according to the present invention is the same even if the slider 65 is moved by one or more actuators or motor means in general that are different from a pneumatic actuator coupled to a return spring.

The present invention in fact relates exclusively to the lever mechanism 10 that converts the linear motion of the slider 65 into a rotary motion: the linear motion can be imparted to the slider 65 by means of any one of the methods known in the art.

It should be noted, furthermore, that the extent of the rotation of the lever 15 can vary according to the requirements and to the work that the lever mechanism 10 must perform.

In practice it has been found that the invention fully achieves the intended aim and objects.

In particular, it has been found that the lever mechanism for converting a motion from linear to rotary thus conceived allows to exceed the quality limitations of the background art, since it allows to reduce the friction and sliding wear that normally affect the mechanical elements of known lever mechanisms.

Another advantage of the lever mechanism according to the invention resides in that it allows a more fluid motion than the background art.

A further advantage of the lever mechanism according to the invention resides in that it prevents failures and jammings caused by friction between the pivot and the internal surface of the guiding slots.

Another advantage of the lever mechanism according to the invention resides in that it allows to store and retain inside it a reserve of lubricant that is sufficient to ensure adequate and durable lubrication of the mechanical elements, thus reducing the frequency of maintenance interventions.

Although the lever mechanism according to the invention has been conceived in particular for converting a motion from linear to rotary, it can in any case be used more generally for motion transmission in a complex machine.

The invention thus conceived is susceptible of numerous modifications and variations, all of which are within the scope of the appended claims; by way of non-limiting example, the person skilled in the art understands without effort that it is possible to provide a safety mechanism capable of blocking the movement of the lever mechanism 10 for example to allow maintenance operations, or that the guiding bar 55 can have a diameter that is variable according to the requirements and to the work that the lever mechanism 10 must perform. All the details may furthermore be replaced with other technically equivalent elements.

In practice, the materials used, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A lever mechanism (10) for converting a motion from linear to rotary, comprising a guiding bar (55), a slider (60) which slides along said guiding bar (55) and acts on a lever (15) by means of a pivot (65), said lever (15) comprising a cylindrical element (30) and a pair of slot links (20, 25) which are fixed frontally on said cylindrical element (30), said slot links (20, 25) each comprising a guiding slot (35), said pivot (65) being able to slide within said guiding slots (35), and comprising
- at least one sliding block (140) which is coupled to said pivot (65) and is interposed between said pivot (65) and an internal surface (350) of at least one of said guiding slots (35), said sliding block (140) being able to slide within said at least one guiding slot (35) **characterized in that** it further comprises
- at least two friction elements (160, 161), which are adapted to reduce friction between said sliding block (140) and said internal surface (350) of said at least one guiding slot (35), said at least two friction elements (160, 161) being arranged between said sliding block (140) and said internal surface (350) of said at least one guiding slot (35), said friction elements (160, 161) comprising at least one plurality of pads (161) and gaps formed between the pads (161) that act as a lubricant reserve, retaining the lubricant forming between said pads (161).

2. The lever mechanism (10) according to claim 1, **characterized in that** said at least one sliding block (140) is substantially shaped like a parallelepiped and comprises an axial hole (151) that is engaged by at least one portion of said pivot (65).

3. The lever mechanism (10) according to claims 1 or 2, **characterized in that** said friction elements (160, 161) are made of thermoplastic material.

4. The lever mechanism (10) according to one or more of the preceding claims, **characterized in that** said friction elements (160, 161) comprise at least two plates (160).

5. The lever mechanism (10) according to the preceding claim, **characterized in that** cavities (162) adapted to retain a lubricant are provided on each one of said plates (160).

6. The lever mechanism (10) according to one or more of the preceding claims, **characterized in that** it comprises two sliding blocks (140), each of which is arranged at one of the two ends of said pivot (65).

7. The lever mechanism (10) according to one or more of the preceding claims, **characterized in that** said slider (60) comprises at least two bushes (80) for the support of said pivot (65) and/or at least two bushes (75) for the support of said guiding bar (55), at least two of said bushes (75, 80) being mutually separated by a space (90) which is adapted to accommodate a lubricant reserve.

8. The lever mechanism (10) according to one or more of the preceding claims, **characterized in that** said bushes (75, 80) have helical lubrication channels on the internal sliding surface.

9. The lever mechanism (10) according to one or more of the preceding claims, **characterized in that** at least one of said slot links (20, 25) comprises a spacer (40) and a cover (45), forming a space (95) that is adapted to accommodate a lubricant reserve.

10. The lever mechanism (10) according to one or more of the preceding claims, **characterized in that** said slider (60) comprises at least one hole (87) which can be closed and is suitable to give access to said spaces (90).

11. A lever mechanism (10) for converting a motion from linear to rotary, comprising a guiding bar (55), a slider (60) which slides along said guiding bar (55) and acts on a lever (15) by means of a pivot (65), said lever (15) comprising a cylindrical element (30) and a pair of slot links (20, 25) which are fixed frontally on said cylindrical element (30), said slot links (20, 25) each comprising a guiding slot (35), said pivot (65) being able to slide within said guiding slots (35), and comprising
- at least one sliding block (140) which is coupled to said pivot (65) and is interposed between said pivot (65) and an internal surface (350) of at least one of said guiding slots (35), said sliding block (140) being able to slide within said at least one guiding slot (35) **characterized in that** it further comprises
- at least two friction elements (160, 161), which are adapted to reduce friction between said sliding block (140) and said internal surface (350) of said at least one guiding slot (35), said at least two friction elements (160, 161) being arranged between said sliding block (140) and said internal surface (350) of said at least one guiding slot (35), said friction elements (160, 161) comprising at least two plates (160), comprising cavities (162) adapted to retain a lubricant being provided on each one of said plates (160).

## Patentansprüche

1. Ein Hebelmechanismus (10) zur Umwandlung einer Bewegung von einer Linear- in eine Drehbewegung, der Folgendes umfasst:
eine Führungsstange (55), einen Schieber (60) der entlang der Führungsstange (55) gleitet und über einen Drehzapfen (65) auf einen Hebel (15) einwirkt, wobei der Hebel (15) ein zylindrisches Element (30) und ein paar von Kulissen (20, 25) umfasst, die vorne an dem zylindrischen Element (30) befestigt sind, wobei die Kulissen (20, 25) jeweils einen Führungsschlitz (35) umfassen, wobei der Drehzapfen (65) in der Lage ist, innerhalb der Führungsschlitze (35) zu gleiten, Folgendes umfassend:
- mindestens einen Gleitblock (140) der mit dem Drehzapfen (65) gekoppelt und zwischen dem Drehzapfen (65) und einer inneren Oberfläche (350) mindestens eines der Führungsschlitze (35) angeordnet ist, wobei der Gleitblock (140) innerhalb des mindestens einen Führungsschlitzes (35) gleiten kann, **dadurch gekennzeichnet, dass** er weiter Folgendes umfasst:
- mindestens zwei Reibungselemente (160, 161) die ausgebildet sind, um Reibung zwischen dem Gleitblock (140) und der inneren Oberfläche (350) des mindestens einen Führungsschlitzes (35) zu reduzieren, wobei die mindestens zwei Reibungselemente (160, 161) zwischen dem Gleitblock (140) und der inneren Oberfläche (350) des mindestens einen Führungsschlitzes (35) angeordnet sind, wobei die Reibungselemente (160, 161) mindestens eine Vielzahl von Noppen (161) und zwischen den Noppen (161) geformte Lücken umfasst, die als Schmiermittellager dienen, welche das Schmiermittel halten, dass sich zwischen den Noppen (161) bildet.

2. Der Hebelmechanismus (10) gemäß Anspruch 1, **dadurch gekennzeichnet, dass** der mindestens eine Gleitblock (140) im Wesentlichen wie ein Parallelepiped geformt ist und ein Axialloch (151) umfasst, in welches mindestens ein Teil des Drehzapfens (65) eingreift.

3. Der Hebelmechanismus (10) gemäß Anspruch 1 oder 2, **dadurch gekennzeichnet, dass** die Reibungselemente (160, 161) aus thermoplastischem Material bestehen.

4. Der Hebelmechanismus (10) gemäß einem oder mehreren der obigen Ansprüche, **dadurch gekennzeichnet, dass** die Reibungselemente (160, 161) mindestens zwei Platten (160) umfassen.

5. Der Hebelmechanismus (10) gemäß obigem Ansprüche, **dadurch gekennzeichnet, dass** Hohlräume (162) die ausgebildet sind, um ein Schmiermittel aufzunehmen in jeder der Platten (160) angebracht sind.

6. Der Hebelmechanismus (10) gemäß einem oder mehreren der obigen Ansprüche, **dadurch gekennzeichnet, dass** er zwei Gleitblöcke (140) umfasst, die jeweils an einem der beiden Enden des Drehzapfens (65) angeordnet sind.

7. Der Hebelmechanismus (10) gemäß einem oder mehreren der obigen Ansprüche, **dadurch gekennzeichnet, dass** der Schieber (60) mindestens zwei Buchsen (80) zur Lagerung des Drehzapfens (65) und/oder mindestens zwei Buchsen (75) zur Lagerung der Führungsstange (55) umfasst, wobei mindestens zwei der Buchsen (75, 80) voneinander durch einen Raum (90) getrennt sind, der ausgebildet ist, um eine Schmiermittelreserve aufzunehmen.

8. Der Hebelmechanismus (10) gemäß einem oder mehreren der Ansprüche, **dadurch gekennzeichnet, dass** die Buchsen (75, 80) an der inneren Gleitfläche schraubenförmige Schmiermittelkanäle haben.

9. Der Hebelmechanismus (10) gemäß einem oder mehreren der obigen Ansprüche, **dadurch gekennzeichnet, dass** mindestens eine der Kulissen (20, 25) ein Abstandselement (40) und eine Abdeckung (45) umfasst, die einen Raum (95) bilden, welcher ausgebildet ist, um eine Schmiermittelreserve aufzunehmen.

10. Der Hebelmechanismus (10) gemäß einem oder mehreren der obigen Ansprüche, **dadurch gekennzeichnet, dass** der Schieber (60) mindestens ein Loch (87) umfasst, das geschlossen werden kann und geeignet ist, Zugriff auf die Räume (90) zu ermöglichen.

11. Ein Hebelmechanismus (10) zur Umwandlung einer Bewegung von einer Linear- in eine Drehbewegung der Folgendes umfasst: eine Führungsstange (55), einen Schieber (60) der entlang der Führungsstange (55) gleitet und über einen Drehzapfen (65) auf einen Hebel (15) einwirkt, wobei der Hebel (15) ein zylindrisches Element (30) und ein paar von Kulissen (20, 25) umfasst, die vorne an dem zylindrischen Element (30) befestigt sind, wobei die Kulissen (20, 25) jeweils einen Führungsschlitz (35) umfassen, wobei der Drehzapfen (65) in der Lage ist, innerhalb der Führungsschlitze (35) zu gleiten, Folgendes umfassend:
- mindestens einen Gleitblock (140) der mit dem Drehzapfen (65) gekoppelt und zwischen dem Drehzapfen (65) und einer Innenfläche (350) mindestens eines der Führungsschlitze (35) angeordnet ist, wobei der Gleitblock (140) in der Lage ist, innerhalb des mindestens einen Führungsschlitzes (35) zu gleiten, **dadurch gekennzeichnet, dass** er weiter Folgendes umfasst:
- mindestens zwei Reibungselemente (160, 161), die ausgebildet sind, um die Reibung zwischen dem Gleitblock (140) und der Innenfläche (350) des mindestens einen Führungsschlitzes (35) zu reduzieren, wobei die mindestens zwei Reibungselemente (160, 161) zwischen dem Gleitblock (140) und der Innenfläche (350) des mindestens einen Führungsschlitzes (35) angeordnet sind, wobei die Reibungselemente (160, 161) mindestens zwei Platten (160) umfassen, die Hohlräume (162) umfassen, welche ausgebildet sind, um ein Schmiermittel aufzunehmen und in jeder der Platten (160) angebracht sind.

## Revendications

1. Mécanisme de levier (10) pour convertir un mouvement de linéaire en rotatif, comprenant une barre de guidage (55), un coulisseau (60) qui coulisse le long de ladite barre de guidage (55) et agit sur un levier (15) au moyen d'un pivot (65), ledit levier (15) comprenant un élément cylindrique (30) et une paire de liaisons à fente (20, 25) qui sont fixées frontalement sur ledit élément cylindrique (30), lesdites liaisons à fente (20, 25) comprenant chacune une fente de guidage (35), ledit pivot (65) étant capable de coulisser à l'intérieur desdites fentes de guidage (35), et comprenant
- au moins un bloc coulissant (140) qui est couplé audit pivot (65) et est interposé entre ledit pivot (65) et une surface interne (350) d'au moins une desdites fentes de guidage (35), ledit bloc coulissant (140) étant capable de coulisser à l'intérieur de ladite au moins une fente de guidage (35), **caractérisé en ce qu'**il comprend en outre
- au moins deux éléments de friction (160, 161), qui sont adaptés pour réduire la friction entre ledit bloc coulissant (140) et ladite surface interne (350) de ladite au moins une fente de guidage (35), lesdits au moins deux éléments de friction (160, 161) étant disposés entre ledit bloc coulissant (140) et ladite surface interne (350) de ladite au moins une fente de guidage (35), lesdits éléments de friction (160, 161) comprenant au moins une pluralité de patins (16) et des espaces formés entre les patins (161) qui agissent comme une réserve de lubrifiant, retenant le lubrifiant se formant entre lesdits patins (161).

2. Mécanisme de levier (10) selon la revendication 1, **caractérisé en ce que** ledit au moins un bloc coulissant (140) présente sensiblement la forme d'un parallélépipède et comprend un trou axial (151) qui est mis en prise par au moins une partie dudit pivot (65).

3. Mécanisme de levier (10) selon les revendications 1 ou 2, **caractérisé en ce que** lesdits éléments de friction (160, 161) sont réalisés en matériau thermoplastique.

4. Mécanisme de levier (10) selon une ou plusieurs des revendications précédentes, **caractérisé en ce que** lesdits éléments de friction (160, 161) comprennent au moins deux plaques (160).

5. Mécanisme de levier (10) selon la revendication précédente, **caractérisé en ce que** des cavités (162) adaptées pour retenir un lubrifiant sont prévues sur chacune desdites plaques (160).

6. Mécanisme à levier (10) selon l'une ou plusieurs des revendications précédentes, **caractérisé en ce qu'**il comprend deux patins (140) dont chacun est disposé à l'une des deux extrémités dudit pivot (65).

7. Mécanisme de levier (10) selon une ou plusieurs des revendications précédentes, **caractérisé en ce que** ledit coulisseau (60) comprend au moins deux douilles (80) pour le support dudit pivot (65) et/ou au moins deux douilles (75) pour le support de ladite barre de guidage (55), au moins deux desdites douilles (75, 80) étant mutuellement séparées par un espace (90) qui est adapté pour recevoir une réserve de lubrifiant.

8. Mécanisme de levier (10) selon une ou plusieurs des revendications précédentes, **caractérisé en ce que** lesdites douilles (75, 80) présentent des canaux de lubrification hélicoïdaux sur la surface de glissement interne.

9. Mécanisme de levier (10) selon une ou plusieurs des revendications précédentes, **caractérisé en ce qu'**au moins une desdites liaisons à fente (20, 25) comprend une entretoise (40) et un couvercle (45), formant un espace (95) qui est adapté pour recevoir une réserve de lubrifiant.

10. Mécanisme à levier (10) selon une ou plusieurs des revendications précédentes, **caractérisé en ce que** ledit coulisseau (60) comprend au moins un trou (87) qui peut être fermé et qui est approprié pour donner accès auxdits espaces (90).

11. Mécanisme de levier (10) pour convertir un mouvement de linéaire en rotatif, comprenant une barre de guidage (55), un coulisseau (60) qui coulisse le long de ladite barre de guidage (55) et agit sur un levier (15) au moyen d'un pivot (65), ledit levier (15) comprenant un élément cylindrique (30) et une paire de liaisons à fente (20, 25) qui sont fixées frontalement sur ledit élément cylindrique (30), lesdites liaisons à fente (20, 25) comprenant chacune une fente de guidage (35), ledit pivot (65) étant capable de coulisser à l'intérieur desdites fentes de guidage (35), et comprenant
- au moins un bloc coulissant (140) qui est couplé audit pivot (65) et est interposé entre ledit pivot (65) et une surface interne (350) d'au moins une desdites fentes de guidage (35), ledit bloc coulissant (140) étant capable de coulisser à l'intérieur de ladite au moins une fente de guidage (35), **caractérisé en ce qu'**il comprend en outre
- au moins deux éléments de friction (160, 161), qui sont adaptés pour réduire la friction entre ledit bloc coulissant (140) et ladite surface interne (350) de ladite au moins une fente de guidage (35), lesdits au moins deux éléments de friction (160, 161) étant agencés entre ledit bloc coulissant (140) et ladite surface interne (350) de ladite au moins une fente de guidage (35), lesdits éléments de friction (160, 161) comprenant au moins deux plaques (160), comprenant des cavités (162) adaptées pour retenir un lubrifiant prévu sur chacune desdites plaques (160).
